# EUROPEAN PATENT APPLICATION

(11) **EP 4 512 657 A1**
(43) Date of publication of application: **26.02.2025**
(21) Application number: 23794864.1
(22) Date of filing: 21.03.2023
(51) Int. Cl.: B60L 58/12, B60L 58/27, H01M 10/615, H01M 10/625

(54) **HEATING METHOD AND APPARATUS FOR TRACTION BATTERY, AND ELECTRONIC DEVICE, SYSTEM AND STORAGE MEDIUM**

(30) Priority: 24.04.2022 CN 202210434648
(71) Applicant: Contemporary Amperex Technology (Hong Kong) Limited, Hong Kong (HK)
(72) Inventor: ZHAO, Yuanmiao, Ningde, Fujian 352100 (CN); LI, Zhanliang, Ningde, Fujian 352100 (CN); YAN, Yu, Ningde, Fujian 352100 (CN); DAN, Zhimin, Ningde, Fujian 352100 (CN); CHEN, Wei, Ningde, Fujian 352100 (CN); CHEN, Xinwei, Ningde, Fujian 352100 (CN); HUANG, Xiaojian, Ningde, Fujian 352100 (CN)
(74) Representative: Gong, Jinping
(86) International application number: PCT/CN2023/082739
(87) International publication number: WO 2023/207429

(57) **Abstract**

A method for heating a power battery (1), an apparatus for heating a power battery (1), an electronic device, a system for heating a power battery (1), and a storage medium. The heating method includes: acquiring a current state parameter value of the power battery (1); and heating the power battery (1) using a corresponding heating mode based on the current state parameter value. After the temperature of the power battery (1) rises, the discharge capacity of the power battery (1) increases, and charging can be achieved.

## Description

### TECHNICAL FIELD

The present application relates to the technical field of batteries, and specifically relates to a method for heating a power battery, an apparatus for heating a power battery, an electronic device, a system for heating a power battery, and a storage medium.

### BACKGROUND

Due to the advantages of high energy density, recyclable charging, safety and environmental protection, power batteries are widely used in the fields of new energy vehicles, consumer electronics, energy storage systems and the like. However, use of the power batteries in a low-temperature environment will be restricted to a certain extent. Specifically, discharge capacity of the power batteries will severely decline in the low-temperature environment, and the power batteries fail to be charged in the low-temperature environment.

### SUMMARY OF THE INVENTION

In view of the above problems, the present application provides a method for heating a power battery, an apparatus for heating a power battery, an electronic device, a system for heating a power battery, and a storage medium, which can solve the problems in the prior art of severe decline of the discharge capacity of the power battery in a low-temperature environment, and failure to charge the power battery in a low-temperature environment. In order to provide basic understanding of some aspects of the disclosed embodiments, simple summary is provided below. The summary is neither intended to provide extensive review, nor intended to identify key/important elements or depict the scope of protection of these embodiments. Its sole purpose is to present some concepts in simple forms as a prelude to detailed description bellow.

In a first aspect, the present application provides a method for heating a power battery, including:
acquiring a current state parameter value of the power battery; and
heating the power battery using a corresponding heating mode based on the current state parameter value.

In the technical solutions provided in the first aspect, the current state parameter value of the power battery is acquired, and the power battery is heated using the corresponding heating mode based on the current state parameter value. After temperature rise, the discharge capacity of the power battery increases, and charging can be achieved, thereby solving the technical problems in the prior art of severe decline of the discharge capacity of the power battery in a low-temperature environment and failure to charge the power battery in a low-temperature environment.

In some embodiments, the heating the power battery using the corresponding heating mode based on the current state parameter value includes: heating the power battery using a self-heating mode and/or an external heating mode based on the current state parameter value. The heating mode includes self-heating and/or external heating, which facilitates the selection of an appropriate heating mode based on the current state parameter value, can perform external heating on the power battery when self-heating is not suitable, overcomes the defect in the prior art of a single heating mode of the power battery, and solves the technical problem of failure to satisfy the actual application requirements only by self-heating.

In some embodiments, the current state parameter value comprises a current temperature value and a current state of charge value; and
the heating the power battery using the corresponding heating mode based on the current state parameter value includes:
heating the power battery using the self-heating mode, in response to the current temperature value of the power battery being smaller than a first preset temperature and a state of charge of the power battery being greater than a preset charge threshold. Reasonable arrangement of a preset self-heating condition can ensure that the self-heating mode is selected when the current state parameter value is most suitable for self-heating.

In some embodiments, the heating the power battery using the self-heating mode includes:
controlling a charging and discharging circuit where the power battery is located to alternately form a charging loop and a discharging loop, to heat the power battery. The charging loop and the discharging loop are alternately formed, and an AC current is used to generate heat to heat the power battery, thus achieving high heating efficiency.

In some embodiments, the method further includes:
acquiring a temperature of a motor coolant in real time in a heating process of using the heating mode of the self-heating;
determining whether a difference between the temperature of the motor coolant and the current temperature value of the power battery from the current state parameter value is larger than a preset temperature difference; and
performing motor coolant-assisted heating, in response to the difference between the temperature of the motor coolant and the current temperature value of the power battery being larger than the preset temperature difference.

The assisted heating of the power battery using the motor coolant can make full use of the heat of the coolant, avoid energy waste, and improve the heating efficiency and heating effects.

In some embodiments, the performing motor coolant-assisted heating includes:
controlling the motor coolant to flow through an external pipeline of the power battery, and performing assisted heating on the power battery using the motor coolant. The assisted heating of the power battery using the motor coolant can make full use of the heat of the coolant, avoid energy waste, and improve the heating efficiency and heating effects.

In some embodiments, the method further includes:
determining whether the current state parameter value of the power battery satisfies a preset self-heating stop condition in the process of heating the power battery using the self-heating mode; and
controlling the charging and discharging circuit where the power battery is located to be disconnected, in response to the current state parameter value of the power battery satisfying the preset self-heating stop condition. Since the self-heating efficiency is low when the preset self-heating stop condition is satisfied, self-heating is stopped when the preset self-heating stop condition is satisfied, which can avoid inefficient self-heating, and avoid energy loss generated in the motor windings during self-heating.

In some embodiments, the current state parameter value comprises the current temperature value of the power battery; and
the determining whether the current state parameter value of the power battery satisfies the preset self-heating stop condition includes:
determining that the current state parameter value satisfies the preset self-heating stop condition, in response to the current temperature value being larger than a second preset temperature. Since the self-heating efficiency is low when the preset self-heating stop condition is satisfied, self-heating is stopped when the preset self-heating stop condition is satisfied, which can avoid inefficient self-heating, and avoid energy loss generated in the motor windings during self-heating.

In some embodiments, the current state parameter value comprises a current temperature rise rate of the power battery; and
the determining whether the current state parameter value of the power battery satisfies the preset self-heating stop condition includes:
determining that the current state parameter value satisfies the preset self-heating stop condition, in response to the current temperature rise rate being smaller than a preset rate. The determining whether self-heating should be stopped based on the temperature rise rate can ensure that self-heating is stopped at a low temperature rise rate, thereby avoiding energy loss caused by inefficient self-heating.

In some embodiments, the method further includes:
further controlling, in response to determining that the power battery is being heated using a motor coolant when the preset self-heating stop condition is satisfied, to stop heating the power battery using the motor coolant. Stopping the coolant-assisted heating can further avoid energy loss caused by controlling the coolant flow.

In some embodiments, the current state parameter value comprises a current temperature value and a current state of charge value; and
the heating the power battery using the corresponding heating mode based on the current state parameter value includes:
heating the power battery using the external heating mode, in response to determining that the current temperature value is larger than or equal to a second preset temperature and smaller than a third preset temperature, or determining that the current state of charge value is less than or equal to the preset charge threshold when the power battery is heated using the self-heating mode; or
heating the power battery using the external heating mode when the current state parameter value fails to satisfy a self-heating condition and the current temperature value is smaller than the third preset temperature. Whether the self-heating condition or the external heating condition is satisfied is determined based on the current state parameter value, to select the corresponding heating mode based on the determination result, which can ensure that a most appropriate heating mode is selected, and can ensure that external heating of the power battery is performed when external heating is most suitable.

In some embodiments, the heating the power battery using the external heating mode includes:
controlling an external heat source to heat the power battery. The external heat source is controlled to perform external heating on the power battery, thus achieving high heating efficiency.

In a second aspect, the present application provides an apparatus for heating a power battery, including:
an acquisition module configured to acquire a current state parameter value of the power battery; and
a heating module configured to heat the power battery using a corresponding heating mode based on the current state parameter value.

The technical solutions provided in the second aspect can be used for implementing the method provided in the first aspect, can acquire the current state parameter value of the power battery, and heat the power battery using the corresponding heating mode based on the current state parameter value. After temperature rise, the discharge capacity of the power battery increases, and charging can be achieved, thereby solving the technical problems in the prior art of severe decline of the discharge capacity of the power battery in a low-temperature environment and failure to charge the power battery in a low-temperature environment.

In a third aspect, the present application provides an electronic device, comprising a memory, a processor, and a computer program stored on the memory and executable on the processor. The processor executes the program to implement the heating method in any one of the above embodiments.

The technical solutions provided in the third aspect can implement the heating method in the first aspect, thereby achieving the same beneficial technical effects as the first aspect.

In a fourth aspect, the present application provides a system for heating a power battery, comprising a controller, a charging and discharging circuit connected to the controller, and an external heat source, wherein the controller is configured to implement the heating method in any one of the above embodiments. The technical solutions provided in the fourth aspect can implement the heating method in the first aspect, thereby achieving the same beneficial technical effects as the first aspect.

In some embodiments, the charging and discharging circuit comprises a switch module, an energy storage module, and a charge and discharge switching module;
the switch module, the charge and discharge switching module, and the power battery are connected in parallel;
a first terminal of the energy storage module is connected to the switch module, a second terminal of the energy storage module is connected to the charge and discharge switching module;
the switch module and the charge and discharge switching module are configured to form a charging and discharging loop under the control of the controller, to charge and discharge the power battery to achieve self-heating; and
the external heat source is configured to perform external heating on the power battery under the control of the controller.

The switch module and the charge and discharge switching module form the charging and discharging loop under the control of the controller, to charge and discharge the power battery to achieve self-heating of the power battery.

In some embodiments, the external heat source comprises a PTC heating apparatus. The PTC heating apparatus is adapted to external heating on the power battery with high heating efficiency.

In a fifth aspect, the present application provides a computer-readable storage medium storing a computer program thereon. The program is executed by a processor to implement the heating method in any one of the above embodiments. The technical solutions provided in the fifth aspect can implement the heating method in the first aspect, thereby achieving the same beneficial technical effects as the first aspect.

In a sixth aspect, the present application provides a battery power plant, comprising a power battery and the heating system in the fourth aspect, wherein the power battery is configured to provide power, and the heating system is configured to heat the power battery. The technical solutions provided in the sixth aspect can implement the heating method in the first aspect, thereby achieving the same beneficial technical effects as the first aspect.

Additional features and advantages of the present application will be set forth in the description bellow, and, in part, will be apparent from the description, or a part of the features and advantages may be inferred or unambiguously determined from the description, or may be understand by implementation of the embodiments of the present application.

### BRIEF DESCRIPTION OF DRAWINGS

In order to more clearly describe technical solutions of embodiments of the present application or the prior art, drawings to be used in the description of the embodiments or the prior art will be briefly introduced below. Apparently, the drawings described below are some embodiments disclosed in the present application. For those of ordinary skills in the art, other drawings may also be obtained based on these drawings without creative efforts.
FIG. 1 shows a flowchart of a method for heating a power battery in some embodiments of the present application;
FIG. 2 shows a flowchart of a method for heating a power battery in some embodiments of the present application;
FIG. 3 shows a flowchart of a method for heating a power battery in a specific example of the present application;
FIG. 4 shows a schematic diagram of heating of a power battery using a coolant;
FIG. 5 shows a schematic diagram of external heating of a power battery using a PTC heater;
FIG. 6 shows a time chart between self-heating, coolant-assisted heating, and external heating using a PTC heater before and after the start of driving;
FIG. 7 shows a time chart between self-heating, coolant-assisted heating, and external heating using a PTC heater before and after the start of charging;
FIG. 8 shows a structural block diagram of a connection of a system for heating a power battery and the power battery in some embodiments of the present application;
FIG. 9 shows a structural block diagram of a connection of a system for heating a power battery and the power battery in some embodiments of the present application;
FIG. 10 shows a structural block diagram of an apparatus for heating a power battery in some embodiments of the present application;
FIG. 11 shows a structural block diagram of an electronic device in some embodiments of the present application; and
FIG. 12 shows a schematic diagram of a computer-readable storage medium in some embodiments of the present application.

The implementations, functional characteristics, and advantages of the objective of the present application will be further described with reference to the accompanying drawings in conjunction with the embodiments.

### DETAILED DESCRIPTION

Embodiments of the technical solutions of the present application will be described in detail below with reference to the accompanying drawings. The following embodiments are only used to more clearly illustrate the technical solutions of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "a plurality of" refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skills in the art, the specific meanings of the above terms in the embodiments of the present application can be understood based on specific situations.

New energy vehicles powered by power batteries have the advantages of good environmental protection effects, low noise, and low costs, can effectively promote energy conservation and emission reduction, have huge market prospects, and are conducive to sustainable economic development. Due to the electrochemical characteristics of power batteries, the performance of power batteries is greatly limited in a low-temperature environment, thereby seriously affecting user experience in winter driving. Therefore, in order to use a power battery normally, it is necessary to heat the power battery in a low-temperature environment.

The inventors discovered that when the power battery is in a low-temperature state, the lower the temperature is, the higher the internal resistance of the battery is, and the better the heating effects are. With the temperature rise, the internal resistance of the battery gradually decreases, and the heating effects of the battery decrease, which is manifested as the increasingly smaller temperature rise rate (temperature rise value per minute °C/min) of the battery. The inventors further discovered that in order to improve the adaptability of an electric vehicle in a cold region, the electric vehicle can be equipped with a self-heating apparatus for the power battery (such as a lithium-ion battery) to heat the power battery. The basic principle of self-heating of the power battery is to discharge current from the power battery and then charge the current back using the increased internal resistance of the power battery at a low temperature. In this way, the current flows through the internal resistance of the power battery, heat is generated inside the power battery, and the temperature rises, thereby achieving the purpose of heating the power battery. However, the defect of the self-heating mode of the power battery is that its effects are limited by a state of charge parameter value and its own temperature: self-heating can be performed only when the power battery has certain state of charge. If the state of charge is too low, self-heating cannot be performed. In addition, the power battery is greatly limited by its own temperature. After the temperature rise of the power battery, the internal resistance of the power battery becomes smaller, and the self-heating efficiency decreases. Therefore, if the power battery is only equipped with the self-heating mode, the heating mode is too single, and fails to satisfy the actual application requirements.

Self-heating of the power battery is a kind of self-excitation, which uses a motor drive system to first discharge the battery energy and then charge the energy back. To discharge the charge from the power battery through the motor, the power battery is first required to have certain state of charge (SOC), so that a large current can be excited on positive and negative electrode busbars of the battery for heating; and if the battery has insufficient state of charge, it fails to generate sufficient heating current, thus failing to guarantee the heating effects. In addition, it is further necessary to avoid the problem of preventing over-discharge of the power battery caused by self-heating of the power battery from impairing the battery life when the SOC is very low; and there will still be the risks of lithium plating and electrolyte solution damage when the SOC is very high. The power battery and the motor drive system are required for self-heating of the power battery. In this case, the power battery and the motor are in a special working mode, so that charging or driving cannot be performed during self-heating.

The power battery involved in the embodiments of the present application may be a lithium-ion battery, a lithium metal battery, a lead-acid battery, a nickel-cadmium battery, a nickel-metal hydride battery, a lithium-sulfur battery, a lithium-air battery, or a sodium-ion battery, etc., which is not limited here. In terms of scale, the power battery in the embodiments of the present application may be a battery cell, or may be a battery module or a battery pack, which is not limited here. In terms of an application scenario, the power battery may be used in a power plant, such as a vehicle or a ship. For example, it may be used in a power vehicle, to power a motor of the power vehicle, and serve as a power source of the electric vehicle. The power battery may also power other electrical devices in the electric vehicle, such as a vehicle air conditioner or a vehicle player.

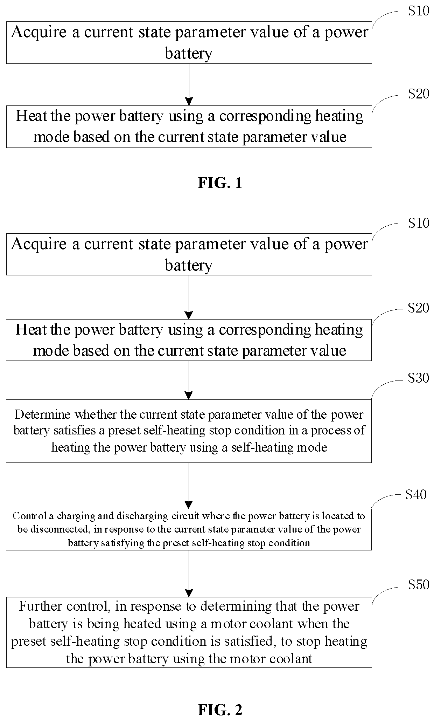

As shown in FIG. 1, a first embodiment of the present application provides a method for heating a power battery. In some embodiments, the method includes:
S10: acquiring a current state parameter value of the power battery.
   The current state parameter value of the power battery may include, for example, at least one of a temperature and a state of charge (SOC). A current temperature and the state of charge (SOC) of the power battery may be read directly from a battery management system (BMS).
S20: heating the power battery using a corresponding heating mode based on the current state parameter value.

The heating the power battery using the corresponding heating mode based on the current state parameter value includes: heating the power battery using a self-heating mode and/or an external heating mode based on the current state parameter value.

Specifically, a preset heating condition satisfied by the current state parameter value is determined, and the power battery is heated using a heating mode corresponding to the satisfied preset heating condition. The heating mode includes self-heating and/or external heating. The preset heating condition may include, for example, a preset self-heating condition and a preset external heating condition.

In some embodiments, the current state parameter value comprises a current temperature value and a current state of charge value; and the step S20 includes: heating the power battery using the self-heating mode if the current temperature value of the power battery is smaller than a first preset temperature and the state of charge of the power battery is greater than a preset charge threshold.

Specifically, after the current state parameter value is determined to satisfy the preset self-heating condition, the power battery is heated using the self-heating mode. Reasonable arrangement of the preset self-heating condition can ensure that a most appropriate heating mode is selected when a heating mode is selected based on the current state parameter value.

The first preset temperature may specifically be set based on actual requirements, for example, may be set to 0°C, 3°C, or 5°C, etc.

The preset charge threshold may specifically be set based on actual requirements, for example, may be set to 20%, 25%, or 30%, etc.

In some embodiments, the heating the power battery using the self-heating mode includes: controlling a charging and discharging circuit where the power battery is located to alternately form a charging loop and a discharging loop, to heat the power battery. The charging loop and the discharging loop are alternately formed, and an AC current is used to generate heat to heat the power battery, thus achieving high efficiency.

The method for heating a power battery in an embodiment of the present application acquires the current state parameter value of the power battery, and heats the power battery using the corresponding heating mode based on the current state parameter value. After temperature rise, the discharge capacity of the power battery increases, and charging can be achieved, thereby solving the technical problems in the prior art of severe decline of the discharge capacity of the power battery in a low-temperature environment and failure to charge the power battery in a low-temperature environment.

In some embodiments, the method further includes:
acquiring a temperature of a motor coolant in real time in a heating process of using a heating mode of the self-heating;
determining whether a difference between the temperature of the motor coolant and the current temperature value of the power battery from the current state parameter value is larger than a preset temperature difference; and
performing motor coolant-assisted heating, in response to the difference between the temperature of the motor coolant and the current temperature value of the power battery being larger than the preset temperature difference. If the difference between the temperature of the motor coolant and the current temperature value of the power battery is larger than the preset temperature difference, a preset motor-assisted heating condition is satisfied. The assisted heating of the power battery using the motor coolant can make full use of the heat of the coolant, avoid energy waste, and improve the heating efficiency and heating effects.

The preset temperature difference may specifically be set based on actual requirements, for example, may be set to 5°C, 6°C, or 8°C, etc.

In some embodiments, the performing motor coolant-assisted heating includes: controlling the motor coolant to flow through an external pipeline of the power battery, and performing assisted heating on the power battery using the motor coolant. The assisted heating of the power battery using the motor coolant can make full use of the heat of the coolant, avoid energy waste, and improve the heating efficiency and heating effects.

In some embodiments, the step S20 includes: determining whether the current state parameter value satisfies the preset self-heating condition or the preset external heating condition; and
controlling the charging and discharging circuit to charge and discharge the power battery to achieve self-heating, in response to the current state parameter value satisfying the preset self-heating condition. Whether the preset self-heating condition or the preset external heating condition is satisfied is determined based on the current state parameter value, to select the corresponding heating mode based on the determination result, which can ensure that a most appropriate heating mode is selected, and can ensure that self-heating is performed when self-heating is most suitable.

Further, said step may further include: controlling an external heat source to perform external heating on the power battery, in response to the preset external heating condition being satisfied. Whether the preset self-heating condition or the preset external heating condition is satisfied is determined based on the current state parameter value, to select the corresponding heating mode based on the determination result, which can ensure that a most appropriate heating mode is selected, and can ensure that external heating of the power battery is performed when external heating is most suitable.

For example, the current state parameter value may be compared with the preset self-heating condition and the preset external heating condition to determine whether the current state parameter value satisfies the preset self-heating condition or satisfies the preset external heating condition.

In some embodiments, the current state parameter value comprises a current temperature value and a current state of charge value; the preset self-heating condition includes the current temperature of the power battery being within a first preset interval and the state of charge of the power battery being within a second preset interval; and the preset external heating condition includes the current temperature of the power battery being within a third preset interval or the state of charge of the power battery being within a fourth preset interval.

A right end of the first preset interval is the aforementioned first preset temperature, and a left end of the first preset interval may be -∞. A left end of the second preset interval is the aforementioned preset charge threshold, and a right end of the second preset interval is 100%. A left end of the third preset interval is the aforementioned first preset temperature, and a right end of the third preset interval is the aforementioned third preset temperature. A left end of the fourth preset interval is 0, and a right end of the fourth preset interval is the aforementioned preset charge threshold. An intersection of the first preset interval and the third preset interval is an empty set, and an intersection of the second preset interval and the fourth preset interval is an empty set. Reasonable arrangement of the preset self-heating condition and the preset external heating condition can ensure that a most appropriate heating mode is selected when a heating mode is selected based on the current state parameter value.

An opening/closing state on a right side of the first preset interval can be set based on actual application requirements. An opening/closing state of the second preset interval can be set based on actual application requirements. An opening/closing state of the third preset interval can be set based on actual application requirements. An opening/closing state of the fourth preset interval can be set based on actual application requirements.

When the state of charge of the power battery is within the second preset interval, the power battery can be ensured to have sufficient state of charge for discharging and charging. When the current temperature of the power battery is within the first preset interval, due to the low temperature in the first preset interval, the power battery has large internal resistance and high self-heating efficiency, which can achieve quick temperature rise of the power battery. In this case, the self-heating mode has highest heating efficiency and best heating effects. When the current temperature of the power battery is within the third preset interval, due to the high temperature in the third preset interval, the internal resistance of the power battery decreases, and the self-heating efficiency decreases. In this case, the external heating mode can be used to make up for the defect of the decrease of the self-heating efficiency. For example, heating by the external heat source, such as a PTC heater, can achieve high heating efficiency.

When the state of charge of the power battery is in the fourth preset interval, the state of charge in the fourth preset interval is small, and can provide small discharging and charging currents, thus resulting in low self-heating efficiency. In this case, the external heating mode can be used to improve the heating efficiency, and enable the power battery to quickly reach a high temperature. For example, heating by the external heat source, such as the PTC heater, can achieve high heating efficiency.

For example, the settings may be as follows: the first preset interval is (-∞, 0), the second preset interval is [20%, 100%], the third preset interval is [0, 20), and the fourth preset interval is [0, 20%). That is, the preset self-heating condition includes the current temperature of the power battery being lower than 0°C and the state of charge of the power battery being greater than or equal to 20%, and the preset external heating condition includes: the current temperature of the power battery being higher than or equal to 0°C and lower than 20°C, or the state of charge of the power battery being greater than or equal to 0 and less than 20%.

For another example, the settings may also be as follows: the first preset interval is (-∞, 5), the second preset interval is [30%, 100%], the third preset interval is [5, 18), and the fourth preset interval is [0, 30%). For another example, the settings may also be as follows: the first preset interval is (-∞, 3), the second preset interval is [25%, 100%], the third preset interval is [3, 22), and the fourth preset interval is [0, 25%). Other intervals may also be set based on actual application requirements.

The heating method provided in the embodiment of the present application determines the preset heating condition satisfied by the current state parameter value of the power battery, and heats the power battery using the heating mode corresponding to the satisfied preset heating condition. The heating mode includes self-heating and external heating, thereby selecting an appropriate heating mode, performing external heating on the power battery when self-heating is not suitable, overcoming the defect in the prior art of a single heating mode of the power battery, and solving the technical problem of failure to satisfy the actual application requirements only by self-heating.

As shown in FIG. 2, in some embodiments, the method further includes:
S30: determining whether the current state parameter value of the power battery satisfies a preset self-heating stop condition in a process of heating the power battery using a self-heating mode; and
S40: controlling a charging and discharging circuit where the power battery is located to be disconnected, in response to the current state parameter value of the power battery satisfying the preset self-heating stop condition.

After the charging and discharging circuit is disconnected, the charging and discharging process of the power battery is stopped, thereby stopping self-heating. Since the self-heating efficiency is low when the preset self-heating stop condition is satisfied, self-heating is stopped when the preset self-heating stop condition is satisfied, which can avoid inefficient self-heating, and avoid energy loss generated in the motor windings during self-heating.

In an example, the current state parameter value comprises the current temperature value of the power battery; and the determining whether the current state parameter value of the power battery satisfies the preset self-heating stop condition includes: determining that the current state parameter value satisfies the preset self-heating stop condition, in response to the current temperature value being larger than a second preset temperature. Since the self-heating efficiency is low when the preset self-heating stop condition is satisfied, self-heating is stopped when the preset self-heating stop condition is satisfied, which can avoid inefficient self-heating, and avoid energy loss generated in the motor windings during self-heating.

The second preset temperature may be set based on actual requirements, for example, may be set to 10°C, 11°C, or 12°C, etc. The second preset temperature is higher than the first preset temperature.

In another example, the current state parameter value comprises a current temperature rise rate of the power battery; and the determining whether the current state parameter value of the power battery satisfies the preset self-heating stop condition includes: determining that the current state parameter value satisfies the preset self-heating stop condition, in response to the current temperature rise rate being lower than a preset rate. The determining whether self-heating should be stopped based on the temperature rise rate can ensure that self-heating is stopped at a low temperature rise rate, thereby avoiding energy loss caused by inefficient self-heating.

The preset rate may be set based on actual requirements, for example, may be set to 0.2°C/min, 0.3°C/min, or 0.4°C/min.

In some embodiments, the method further includes:
S50: further controlling, in response to determining that the power battery is being heated using a motor coolant when the preset self-heating stop condition is satisfied, to stop heating the power battery using the motor coolant.

Stopping the coolant-assisted heating can further avoid energy loss caused by controlling the coolant flow.

In some embodiments, the current state parameter value comprises a current temperature value and a current state of charge value; and
the step S20 includes: heating the power battery using the external heating mode, in response to determining that the current temperature value is larger than or equal to a second preset temperature and smaller than a third preset temperature, or determining that the current state of charge value is less than or equal to the preset charge threshold when the power battery is heated using the self-heating mode; or
heating the power battery using the external heating mode when the current state parameter value fails to satisfy a self-heating condition and the current temperature value is smaller than the third preset temperature. When the current state parameter value fails to satisfy the self-heating condition and the current temperature value is smaller than the third preset temperature, it is determined that the preset external heating condition is satisfied. Whether the preset self-heating condition or the preset external heating condition is satisfied is determined based on the current state parameter value, to select the corresponding heating mode based on the determination result, which can ensure that a most appropriate heating mode is selected, and can ensure that self-heating is performed when self-heating is most suitable.

The third preset temperature may be set based on actual requirements, for example, may be set to 18°C, 20°C, or 22°C, etc. The third preset temperature is higher than the second preset temperature.

In some embodiments, the heating the power battery using the external heating mode includes: **controlling** an external heat source to heat the power battery.

Whether the preset self-heating condition or the preset external heating condition is satisfied is determined based on the current state parameter value, to select the corresponding heating mode based on the determination result, which can ensure that a most appropriate heating mode is selected, and can ensure that external heating of the power battery is performed when external heating is most suitable.

**In** an example, whether the current state parameter value of the power battery satisfies the preset self-heating stop condition during self-heating is determined. During self-heating, the current state parameter value of the power battery is acquired in real time, and whether the current state parameter value satisfies the preset self-heating stop condition is determined. The preset self-heating stop condition may include, for example, at least one of two conditions: the current temperature of the power battery is within a seventh preset interval and the current temperature rise rate of the power battery is within an eighth preset interval.

In an example, the current state parameter value of the power battery comprises the current temperature of the power battery; and the preset self-heating stop condition includes the current temperature of the power battery being within the seventh preset interval. Reasonable arrangement of the preset self-heating stop condition can ensure that self-heating is stopped in a most appropriate situation, thereby avoiding energy loss caused by inefficient self-heating.

A left end of the seventh preset interval is the aforementioned second preset temperature. A right end of the seventh preset interval may be +∞. An opening/closing state on a left side of the seventh preset interval may be set based on actual requirements, for example, may be set to (10, +∞), [11, +∞), or (12, +∞), etc.

Taking the seventh preset interval being (10, +∞) as an example, when the current temperature of the power battery is higher than 10°C, it is determined that the preset self-heating stop condition is satisfied.

In another example, the current state parameter value of the power battery comprises the current temperature rise rate of the power battery; and the preset self-heating stop condition includes the current temperature rise rate of the power battery being within the eighth preset interval.

In this example, before the determining whether the current state parameter value of the power battery satisfies the preset self-heating stop condition, the method further includes: acquiring the temperature rise rate of the power battery in real time when the charging and discharging circuit is controlled to charge and discharge the power battery to achieve self-heating.

The determining whether self-heating should be stopped based on the temperature rise rate can ensure that self-heating is stopped at a low temperature rise rate, thereby avoiding energy loss caused by inefficient self-heating. Since the preset self-heating stop condition used in this example involves the temperature rise rate of the power battery, it is necessary to acquire the temperature rise rate of the power battery in real time when the charging and discharging circuit is controlled to charge and discharge the power battery to achieve self-heating, to determine whether the current temperature rise rate of the power battery satisfies the preset self-heating stop condition.

The temperature rise rate may be computed by a battery management system (BMS). To acquire the temperature rise rate of the power battery, the temperature rise rate may be read directly from the battery management system (BMS).

A right endpoint of the eighth preset interval is the aforementioned preset rate. An opening/closing state of the seventh preset interval may be set based on actual requirements, for example, may be set to [0, 0.2), [0, 0.3], or [0, 0.4), etc. The unit of the temperature rise rate is °C/min. Taking the eighth preset interval being [0, 0.2) as an example, when the temperature rise rate is smaller than 0.2°C/min, the preset self-heating stop condition is reached.

If the preset self-heating stop condition is satisfied, the charging and discharging circuit is controlled to stop charging and discharging the power battery, to stop self-heating.

The controlling to stop charging and discharging the power battery can be implemented by controlling the disconnection of the charging and discharging loop.

Since the self-heating efficiency is low when the preset self-heating stop condition is satisfied, but energy loss is still generated in the motor windings, self-heating is stopped when the preset self-heating stop condition is satisfied, which can avoid inefficient self-heating, and avoid energy loss generated in the motor windings during self-heating.

If the preset self-heating stop condition is not satisfied, step S40 is skipped to, that is, maintaining self-heating, acquiring the current state parameter value of the power battery in real time, and determining whether the preset self-heating stop condition is satisfied.

Further, whether the current temperature of the power battery is within a sixth preset interval is determined.

A right end of the sixth preset interval is the aforementioned third preset temperature. A left end of the sixth preset interval may be -∞. An opening/closing state on a right side of the sixth preset interval may be set based on actual requirements, for example, may be set to (-∞, 20), (-∞, 21], or (-∞, 22), etc.

If the current temperature of the power battery is within the sixth preset interval, the external heat source is controlled to perform external heating on the power battery.

Taking the sixth preset interval being (-∞, 20) as an example, if the current temperature of the power battery is lower than 20°C, the external heat source is controlled to perform external heating on the power battery. After self-heating is stopped, external heating is started, so that external heating can be performed in a state most suitable for external heating, to most efficiently enhance the temperature of the power battery.

After self-heating is stopped, the power battery is heated by the external heat source, to further enhance the temperature of the power battery. The external heat source may be, for example, a PTC heating apparatus.

When the power battery is heated by the external heat source, such as the PTC heating apparatus, the electric vehicle is allowed to travel or the power battery is allowed to be charged.

Further, whether the temperature of the power battery exceeds the sixth preset interval is determined in real time, and if the temperature of the power battery exceeds the sixth preset interval, external heating of the power battery is stopped.

In a process of performing external heating on the power battery, the temperature of the power battery is acquired in real time. When the temperature of the power battery exceeds the sixth preset interval, external heating of the power battery is stopped.

Taking the sixth preset interval being (-∞, 20) as an example, if the current temperature of the power battery reaches 20°C or above, the external heat source is controlled to stop heating the power battery. When the temperature of the power battery exceeds the sixth preset interval, the temperature of the power battery can satisfy the actual application requirements, so that it is not necessary to further continue heating. Therefore, heating of the power battery is stopped.

During self-heating of the power battery, the motor generates heat due to the current flowing through the windings. An effluent temperature of the motor coolant (the coolant is usually water, but of course, may also be other liquids for cooling the motor) may be detected. When the effluent temperature exceeds the battery temperature, the outputted coolant may be introduced into an external liquid flow channel of the power battery, for assisted heating of the power battery.

A second embodiment of the present application provides a method for heating a power battery. In some embodiments, in addition to the steps S10 to S30 in the last embodiment, the method further includes:
S40': acquiring a temperature of the power battery and a temperature of the motor coolant in real time when the charging and discharging circuit is controlled to charge and discharge the power battery to achieve self-heating.
   Specifically, the temperature of the power battery can be read from the battery management system (BMS), and the temperature of the motor coolant can be read from a vehicle control unit (VCU).
S50': determining whether a difference between a current temperature of a motor coolant and a current temperature of the power battery is within a fifth preset interval.
   A left end of the fifth preset interval is the aforementioned preset temperature difference. An opening/closing state of the fifth preset interval can be set based on actual application requirements. For example, the fifth preset interval may be (5, +∞), (6, +∞), or [8, +∞), etc.
S60': controlling to heat the power battery using the motor coolant, in response to the difference between the current temperature of the motor coolant and the current temperature of the power battery being within the fifth preset interval.

Taking the fifth preset interval being (5, +∞) as an example, when the difference between the current temperature of the motor coolant and the current temperature of the power battery is larger than 5°C, the power battery is controlled to be heated using the motor coolant.

The assisted heating of the power battery using the motor coolant can make full use of the heat of the coolant, avoid energy waste, and improve the heating efficiency and heating effects.

During self-heating of the power battery, the motor windings will generate heat due to the current flowing therethrough. A coolant in a motor cooling system absorbs the heat emitted from the motor windings and its temperature rises. An effluent temperature of the motor cooling system can be detected. When a difference between the effluent temperature and the current temperature of the power battery exceeds a preset threshold, the coolant can be introduced into an external liquid flow channel of the power battery to heat the power battery, thereby making full use of the heat of the coolant, avoiding energy waste, and improving the heating efficiency and heating effects.

In some embodiments, the method further includes:
S70': determining whether the current state parameter value of the power battery satisfies the preset self-heating stop condition; and
S80': controlling, in response to the current state parameter value of the power battery satisfying the preset self-heating stop condition, to stop charging and discharging the power battery to stop self-heating, and controlling to stop heating the power battery using the motor coolant.

Since the self-heating efficiency is low when the preset self-heating stop condition is satisfied, self-heating is stopped when the preset self-heating stop condition is satisfied, which can avoid inefficient self-heating, and avoid energy loss generated in the motor windings during self-heating. Stopping coolant-assisted heating can further avoid energy loss caused by controlling the coolant flow.

After the step S80', the method in this embodiment further includes the steps S60 to S80 in the last embodiment. That is, the method in this embodiment includes: sequentially executed steps S10 to S30, steps S40' to S80', as well as determining whether the current temperature of the power battery is within the sixth preset interval, controlling the external heat source to perform external heating on the power battery in response to the current temperature of the power battery being within the sixth preset interval, determining in real time whether the temperature of the power battery exceeds the sixth preset interval, and stopping external heating of the power battery in response to the temperature of the power battery exceeding the sixth preset interval.

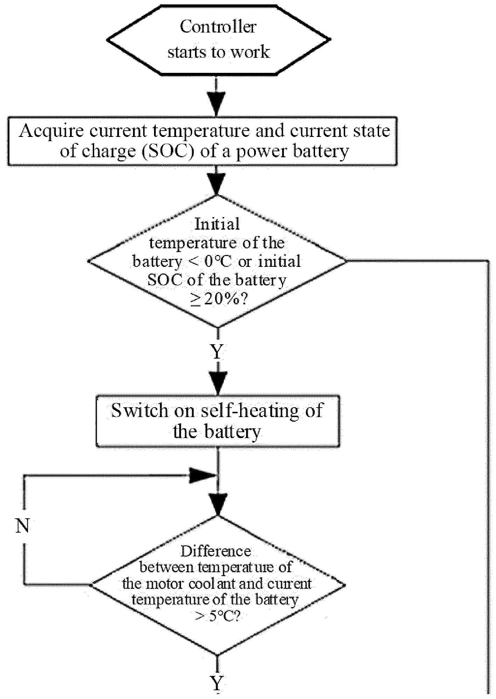

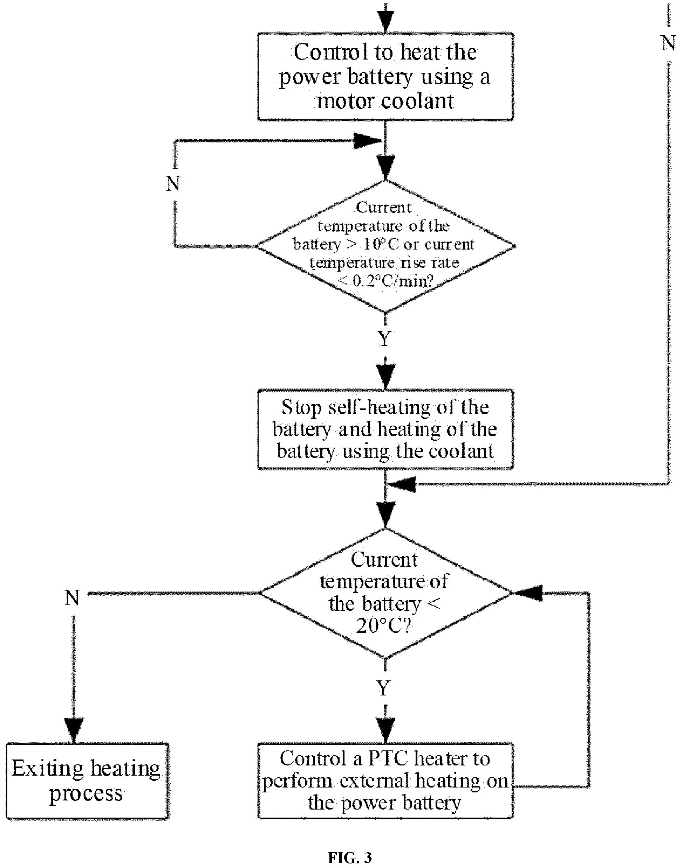

Referring to FIG. 3, in a specific example, a method for heating a power battery is provided, including the following steps:
acquiring a current temperature and a current state of charge (SOC) of the power battery;
determining whether a preset self-heating condition is satisfied; wherein the preset self-heating condition include a current temperature of the power battery being lower than 0°C and the current SOC of the power battery being greater than or equal to 20%;
switching on self-heating of the power battery in response to the preset self-heating condition being satisfied;
determining whether the current temperature of the power battery is lower than 20°C in response to the preset self-heating condition not being satisfied;
switching on a PTC heater for heating in response to the current temperature being lower than 20°C;
detecting a temperature of the power battery in real time in a heating process using the PTC heater, and exiting a power battery heating program when the current temperature of the power battery reaches 20°C;
acquiring a temperature of a motor coolant and the temperature of the power battery in real time in a self-heating process of the power battery; and controlling to heat the power battery using the motor coolant when a difference between the temperature of the motor coolant and the temperature of the power battery exceeds 5°C;
detecting in real time whether the temperature of the power battery is higher than 10°C or the temperature rise rate is smaller than 0.2°C/min;
stopping self-heating of the power battery and heating of the power battery by the coolant in response to the temperature of the power battery being higher than 10°C or the temperature rise rate being lower than 0.2°C/min;
determining whether the current temperature of the power battery is lower than 20°C;
skipping to the above switching on the PTC heater for heating in response to the current temperature of the power battery being lower than 20°C; and
exiting the power battery heating program in response to the current temperature of the power battery being higher than or equal to 20°C.

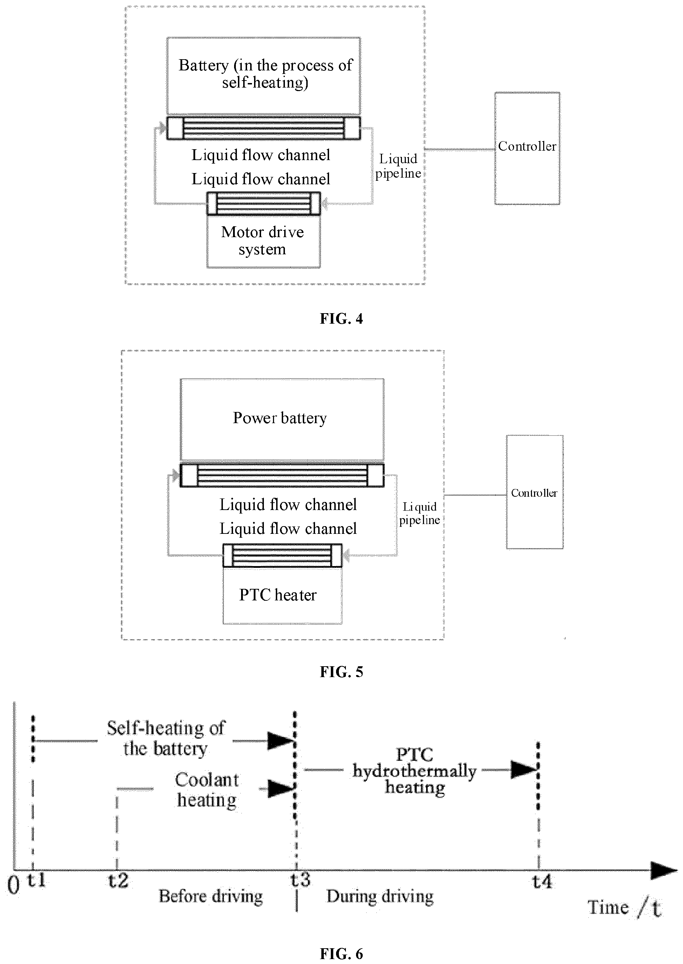

As shown in FIG. 4, in a self-heating process of a power battery, a controller controls a coolant to circulate between a liquid flow channel of a motor drive system and an external liquid flow channel of the battery, thereby achieving assisted heating of the power battery using the heat of the coolant.

As shown in FIG. 5, when external heating on a power battery is performed using a PTC heater, a controller controls the PTC heater to input its own water into an external liquid flow channel of the power battery, and then the water flows back to the PTC heater from the external liquid flow channel of the power battery, thereby performing external heating on the power battery through circulation flow.

Based on the characteristics of the power battery, with the temperature rise of the battery, the internal resistance of the battery will gradually decrease, so that the self-heating effects of the battery will gradually become worse. However, the electric drive system is still excited for self-heating, so that the energy consumption will still be very large, but the heating effects of the battery are poor. When it is determined that by self-heating, the temperature of the battery rises to a certain temperature or the temperature rise rate of the battery decreases to a certain value, self-heating of the battery is switched off to avoid high energy consumption under self-heating, and the external heating mode is switched to for heating the power battery, that is, the PTC heater is switched on for heating. After the PTC heater is switched on for heating, the battery has spent an inefficient heating interval of the PTC heater due to rapid temperature rise of self-heating (the lower the temperature is, the worse the PTC heating effects are). Heating by the PTC heater from the current temperature achieves high heating efficiency and small energy consumption, and is energy-saving. In addition, switching on the PTC heater for heating does not affect the vehicle charging or driving, and is time-saving.

As shown in FIG. 6, in a specific example, before a vehicle is started to travel, self-heating of the battery is started at time t1; motor coolant-assisted heating is started at time t2; self-heating and motor coolant-assisted heating of the battery are stopped, heating by a PTC heater is started, and the vehicle is started to travel at time t3; and heating by the PTC heater is stopped at time t4.

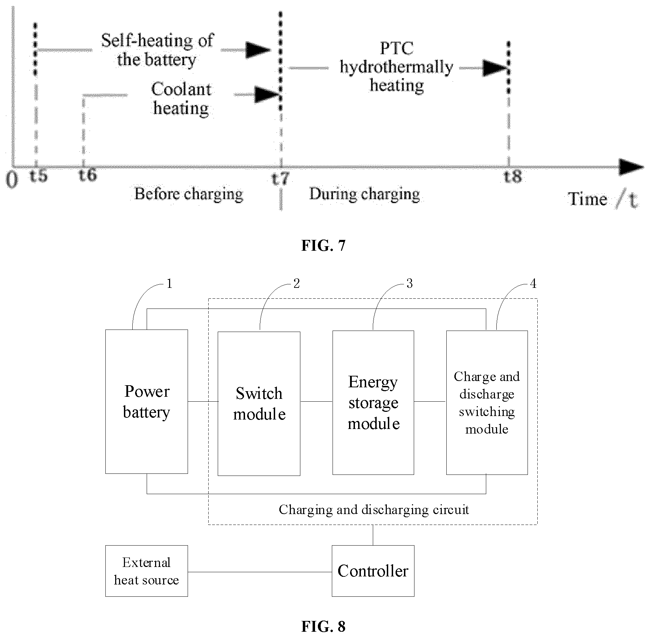

As shown in FIG. 7, in a specific example, before a vehicle is started to travel, self-heating of the battery is started at time t5; motor coolant-assisted heating is started at time t6; self-heating and motor coolant-assisted heating of the battery are stopped, heating by a PTC heater is started, and charging of the vehicle is started at time t7; and heating by the PTC heater is stopped at time t8.

As shown in FIG. 8, a third embodiment of the present application provides a system for heating a power battery, comprising a controller, a charging and discharging circuit connected to the controller, and an external heat source. The controller can be configured to implement the method for heating a power battery in any one of the above embodiments. The charging and discharging circuit comprises a switch module 2, an energy storage module 3, and a charge and discharge switching module 4; the switch module 2, the charge and discharge switching module 4, and a power battery 1 are connected in parallel; a first terminal of the energy storage module 3 is connected to the switch module, and a second terminal of the energy storage module 3 is connected to the charge and discharge switching module 4; the switch module 2 and the charge and discharge switching module 4 are configured to form a charging and discharging loop under the control of the controller, to charge and discharge the power battery 1 to achieve self-heating; and the external heat source is configured to perform external heating on the power battery 1 under the control of the controller. The switch module and the charge and discharge switching module form the charging and discharging loop under the control of the controller, to charge and discharge the power battery to achieve self-heating of the power battery.

Specifically, the energy storage module 3 may comprise a motor winding, and the switch module 2 may comprise a motor inverter.

In some embodiments, the external heat source comprises a PTC heating apparatus. An external heating apparatus in other forms may also serve as the external heat source. The PTC heating apparatus is adapted to external heating on the power battery with high heating efficiency. The PTC heating apparatus is, for example, a PTC heater. The PTC heater can hydrothermally heat the power battery, that is, PTC resistance wire generates heat to heat the coolant, and then the heated coolant is introduced into an external liquid flow channel of the power battery. The power battery absorbs heat in the external liquid flow channel, and is gradually heated up. The heating method using the PTC heater is adapted to many working conditions, and is also adapted even during charging or driving.

In some embodiments, the charge and discharge switching module comprises a first switching circuit and a second switching circuit connected in series; a connection point of the first switching circuit and the second switching circuit is connected to the second terminal of the energy storage module; and the first switching circuit and the second switching circuit are configured to be switched on or off when triggered by a charge/discharge enable signal.

In some embodiments, the first switching circuit comprises an upper bridge arm, the second switching circuit comprises a lower bridge arm; and a connection point of the upper bridge arm and the lower bridge arm is connected to the second terminal of the energy storage module.

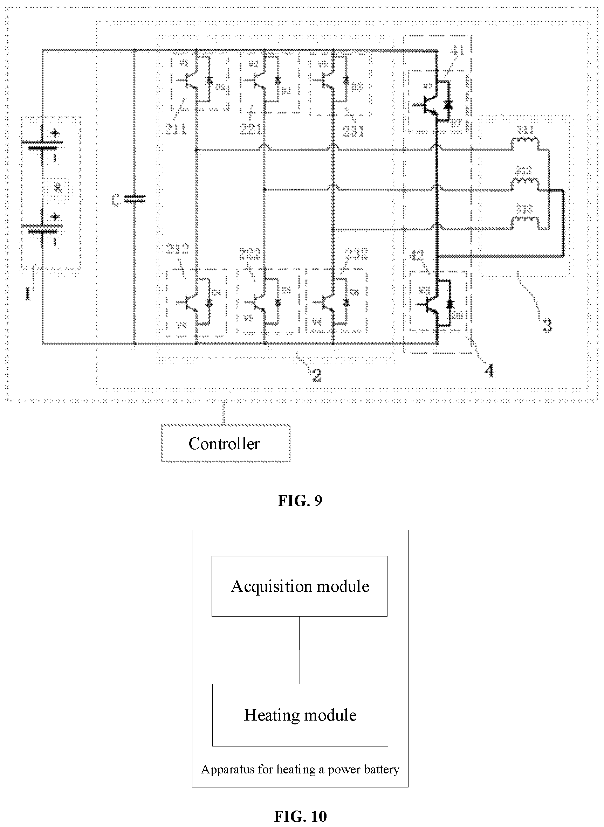

As shown in FIG. 9, in an example, an energy storage module 3 comprises three-phase windings of the motor. The three-phase windings are winding 311, winding 312, and winding 313 respectively. A switch module 2 comprises a bridge arm 21, a bridge arm 22, and a bridge arm 23 of a motor inverter. Internal resistance of a power battery 1 is R. A charge and discharge switching module 4 comprises a first switching circuit and a second switching circuit connected in series. The first switching circuit comprises a first upper bridge arm, the second switching circuit comprises a first lower bridge arm; and a connection point of the first upper bridge arm and the first lower bridge arm is connected to a neutral point of the three-phase windings. The first upper bridge arm comprises a first switch and a first diode connected in parallel, the first lower bridge arm comprises a second switch and a second diode connected in parallel; a negative electrode of the first diode is connected to a positive electrode of a power supply module, a positive electrode of the first diode is connected to a negative electrode of the second diode, and a positive electrode of the second diode is connected to a negative electrode of a first battery pack. The upper bridge arm 41 is the first upper bridge arm, and the lower bridge arm 42 is the first lower bridge arm. The upper bridge arm 41 comprises a first switch V7 and a first diode D7 connected in parallel, the lower bridge arm 42 comprises a second switch V8 and a second diode D8 connected in parallel; a negative electrode of the first diode D7 is connected to a positive electrode of the power battery, a positive electrode of the first diode D7 is connected to a negative electrode of the second diode D8, and a positive electrode of the second diode D8 is connected to a negative electrode of the power battery. In some modified embodiments, the first upper bridge arm may only comprise the first switch, but does not comprise the first diode, and the first lower bridge arm may only comprise the second switch, but does not comprise the second diode. Specifically, a connection point of the upper bridge arm 211 and the lower bridge arm 212 of the bridge arm 21 is connected to one terminal of the winding 311, and a connection point of the upper bridge arm 221 and the lower bridge arm 222 of the bridge arm 22 is connected to one terminal of the winding 312. A connection point of the upper bridge arm 231 and the lower bridge arm 232 of the arm 23 is connected to one terminal of the winding 313, and a connection point of the upper bridge arm 41 and the lower bridge arm 42 of the charge and discharge switching module 4 is connected to the neutral point of the three-phase windings.

The upper bridge arm 211 comprises a switch V1 and a diode D1 connected in parallel, the lower bridge arm 212 comprises a switch V4 and a diode D4 connected in parallel; the upper bridge arm 221 comprises a switch V2 and a diode D2 connected in parallel, the lower bridge arm 222 comprises a switch V5 and a diode D5 connected in parallel; the upper bridge arm 231 comprises a switch V3 and a diode D3 connected in parallel, and the lower bridge arm 232 comprises a switch V6 and a diode D6 connected in parallel. Negative electrodes of D1, D2, and D3 are all connected to the positive electrode of the power battery 1, and positive electrodes of D4, D5, and D6 are all connected to the negative electrode of the power battery 1.

The power battery 1, the upper bridge arms 211-231, the windings 311-313, and the lower bridge arm 42 jointly form a discharging loop; and the power battery 1, the lower bridge arms 212-232, the windings 311-313, and the upper bridge arm 41 jointly form a charging loop. Under the control of the controller, the charging loop and the discharging loop are periodically switched on alternately. By controlling the same magnitude and phase of the current flowing into each of the windings 311-313 of the three-phase motor, when the power battery is heated using the loop of the three-phase motor, the vibration noise of the motor can be effectively suppressed. Further, this charging and discharging circuit will not cause the three-phase motor to operate, thereby solving the problem of heat generation by the rotor in the motor, and extending the self-heating service time of the power battery. The discharging loop and the charging loop can be implemented simply by ensuring that an upper bridge arm of three-phase bridge arms of the windings 311-313 and a lower bridge arm 42 of the charge and discharge switching module 4 connected to the neutral point of the three-phase windings simultaneously keep ON or OFF of switches, and a lower bridge arm of three-phase bridge arms of the windings 311-313 and an upper bridge arm 41 of the charge and discharge switching module 4 connected to the neutral point of the three-phase windings simultaneously keep ON or OFF of the switches.

The system for heating a power battery provided in this embodiment can be configured to implement the heating method in any one of the above embodiments, and can achieve the same beneficial effects as the heating method.

As shown in FIG. 10, a fourth embodiment of the present application provides an apparatus for heating a power battery. In some embodiments, the heating apparatus comprises:
an acquisition module configured to acquire a current state parameter value of the power battery; and
a heating module configured to heat the power battery using a corresponding heating mode based on the current state parameter value.

Specifically, the heating module is configured to heat the power battery using a heating mode corresponding to a preset heating condition satisfied by the current state parameter value. The heating mode includes self-heating and/or external heating.

The apparatus for heating a power battery in the present application is configured to implement the heating method in any one of the above embodiments, acquire the current state parameter value of the power battery, and heat the power battery using the corresponding heating mode based on the current state parameter value. After temperature rise, the discharge capacity of the power battery increases, and charging can be achieved, thereby solving the technical problems in the prior art of severe decline of the discharge capacity of the power battery in a low-temperature environment and failure to charge the power battery in a low-temperature environment.

In some embodiments, the current state parameter value comprises a current temperature value and a current state of charge value; and
the heating module is further specifically configured to: heat the power battery using the self-heating mode, in response to the current temperature value of the power battery being smaller than a first preset temperature and a state of charge of the power battery being greater than a preset charge threshold.

The heating the power battery using the self-heating mode performed by the heating module includes: controlling a charging and discharging circuit where the power battery is located to alternately form a charging loop and a discharging loop, to heat the power battery.

**In** some embodiments, the heating apparatus further comprises:
a coolant temperature acquisition unit configured to acquire a temperature of a motor coolant in real time in a heating process of using a heating mode of the self-heating;
an ascertainment unit configured to determine whether a difference between the temperature of the motor coolant and the current temperature value of the power battery from the current state parameter value is larger than a preset temperature difference; and
a determination unit configured to perform motor coolant-assisted heating, in response to the difference between the temperature of the motor coolant and the current temperature value of the power battery being larger than the preset temperature difference.

The performing motor coolant-assisted heating performed by the determination unit includes: controlling the motor coolant to flow through an external pipeline of the power battery, and performing assisted heating on the power battery using the motor coolant.

**In** some embodiments, the apparatus further comprises:
a preset self-heating stop condition determination module configured to determine whether the current state parameter value of the power battery satisfies a preset self-heating stop condition in a process of heating the power battery using the self-heating mode; and
control the charging and discharging circuit where the power battery is located to be disconnected, in response to the current state parameter value of the power battery satisfying the preset self-heating stop condition.

In an example, the current state parameter value comprises the current temperature value of the power battery; and
the preset self-heating stop condition determination module is specifically further configured to: determine that the current state parameter value satisfies the preset self-heating stop condition, in response to the current temperature value being larger than a second preset temperature.

In another example, the current state parameter value comprises a current temperature rise rate of the power battery; and
the preset self-heating stop condition determination module is specifically further configured to: determine that the current state parameter value satisfies the preset self-heating stop condition, in response to the current temperature rise rate being smaller than a preset rate.

In some embodiments, the apparatus further comprises:
a coolant heating stop module configured to further control, in response to determining that the power battery is being heated using a motor coolant when the preset self-heating stop condition is satisfied, to stop heating the power battery using the motor coolant.

In some embodiments, the current state parameter value comprises a current temperature value and a current state of charge value; and
the heating module is further specifically configured to:
heat the power battery using the external heating mode, in response to determining that the current temperature value is larger than or equal to a second preset temperature and smaller than a third preset temperature, or determining that the current state of charge value is less than or equal to the preset charge threshold when the power battery is heated using the self-heating mode; or
heat the power battery using the external heating mode when the current state parameter value fails to satisfy a self-heating condition and the current temperature value is smaller than the third preset temperature.

The heating the power battery using the external heating mode performed by the heating module includes: controlling an external heat source to heat the power battery.

The heating apparatus provided in this embodiment determines the preset heating condition satisfied by the current state parameter value of the power battery, and heats the power battery using the heating mode corresponding to the satisfied preset heating condition. The heating mode includes self-heating and external heating, thereby selecting an appropriate heating mode, performing external heating on the power battery when self-heating is not suitable, overcoming the defect in the prior art of a single heating mode of the power battery, and solving the technical problem of failure to satisfy actual application requirements only by self-heating.

A fifth embodiment of the present application provides an electronic device, comprising a memory, a processor, and a computer program stored on the memory and executable on the processor. The processor executes the computer program to implement the heating method in any one of the above embodiments.

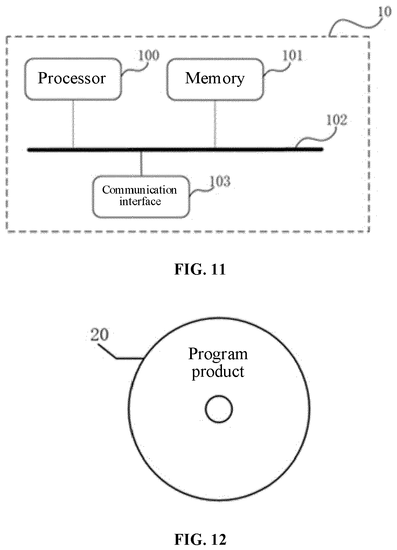

As shown in FIG. 11, the electronic device 10 may comprise: a processor 100, a memory 101, a bus 102, and a communication interface 103. The processor 100, the communication interface 103, and the memory 101 are connected through the bus 102; the memory 101 stores a computer program executable on the processor 100, and the processor 100 executes, when running the computer program, the method provided in any one of the above embodiments of the present application.

The memory 101 may include a high-speed random access memory (RAM), and may further include a non-volatile memory, e.g., at least one disk memory. A communication connection between the system network element and at least one other network element may be implemented through at least one communication interface 103 (either wired or wireless) using the Internet, a wide area network, a local network, a metropolitan area network, or the like.

The bus 102 may be an ISA bus, a PCI bus, an EISA bus, or the like. The bus may be classified into an address bus, a data bus, or a control bus, etc. The memory 101 is configured to store a program, the processor 100 executes the program after receiving an execution instruction, and the method disclosed in any one embodiment among the above embodiments of the present application may be applied to the processor 100 or implemented by the processor 100.

The processor 100 may be an integrated circuit chip with a signal processing capability. In an implementation process, steps of the above method may be completed by an integrated logic circuit of hardware in the processor 100 or instructions in the form of software. The above processor 100 may be a general-purpose processor, including a Central Processing Unit (abbreviated as CPU), and a network processor (abbreviated as NP), etc., or may be a digital signal processor (DSP), an application specific integrated circuit (ASIC), a field programmable gate array (FPGA) or other programmable logic devices, a discrete gate or transistor logic device, or a discrete hardware component, and can implement or execute the methods, steps, and logical block diagrams disclosed in the embodiments of the present application. The general-purpose processor may be a microprocessor or the processor may also be any conventional processor or the like. The steps of the method disclosed in the embodiments of the present application may be directly embodied as being executed and completed by a hardware decoding processor, or being executed and completed by a combination of hardware and software modules in the decoding processor. The software module may be located in a mature storage medium in the art, such as a random access memory, a flash memory, a read-only memory, a programmable read-only memory or an electrically erasable programmable memory, or a register. The storage medium is located in the memory 101. The processor 100 reads information from the memory 101, and completes the steps of the above method in combination with its hardware.

The electronic device provided in the embodiments of the present application is derived from a same inventive concept as the method provided in the embodiments of the present application, and has same beneficial effects as the method adopted, operated, or implemented thereof.

A sixth embodiment of the present application provides a computer-readable storage medium storing a computer program thereon. The program is executed by a processor to implement the heating method in any one of the above embodiments.

Referring to FIG. 12, a computer-readable storage medium shown therein is an optical disk 20 storing a computer program (i.e., program product) thereon. When executed by a processor, the computer program will implement the method provided in any of the above embodiments.

It should be noted that examples of the computer-readable storage medium may further include, but are not limited to, a phase-change random-access memory (PRAM), a static random-access memory (SRAM), a dynamic random-access memory (DRAM), a random-access memory (RAM) of other type, a read-only memory (ROM), an electrically erasable programmable read-only memory (EEPROM), a flash RAM or other optical or magnetic storage mediums, which will not be detailed one by one here.

The computer-readable storage medium provided in the above embodiments of the present application is derived from a same inventive concept as the method provided in the embodiments of the present application, and has same beneficial effects as the method adopted, operated, or implemented in an application program stored therein.

A seventh embodiment of the present application provides a battery power plant, comprising a power battery and the heating system in any one of the above embodiments, wherein the power battery is configured to provide power, and the heating system is configured to heat the power battery.

The battery power plant may be, for example, an apparatus powered by a battery, such as an electric vehicle.

It should be noted that:
the term "module" is not intended to be limited to a particular physical form. Depending on a specific application, the module may be implemented as hardware, firmware, software, and/or a combination thereof. In addition, different modules may share a common component or even be implemented by a same component. There may or may not be clear boundaries between different modules.

The algorithms and displays provided herein are not inherently associated with any particular computer, virtual apparatus, or other device. Various general-purpose apparatuses may also be used together with examples based here. The structure required to construct such an apparatus will be apparent from the above description. Further, the present application is not specific to any particular programming language. It should be understood that the contents described herein may be implemented using a variety of programming languages, and that the above descriptions of particular languages are intended to disclose preferred embodiments of the present application.

It should be understood that although various steps in the flow charts of the drawings are shown in a sequence as indicated by the arrows, these steps are not necessarily executed in the sequence indicated by the arrows. Unless explicitly stated herein, the execution of these steps is not strictly limited in sequence, and may also be executed in other sequences. Further, at least some of the steps in the flow charts of the drawings may include a plurality of sub-steps or a plurality of stages. These sub-steps or stages are not necessarily executed at a same moment, but may be executed at different moments, may not necessarily be performed sequentially in an execution sequence, but may be performed in turn or alternately with other steps or sub-steps of other steps or at least some of the stages.

The above embodiments merely represent some embodiments of the present application, giving specifics and details thereof, but should not be understood as limiting the scope of patent of the present application thereby. It should be noted that a person of ordinary skill in the art could also make several alterations and improvements without departing from the concept of the present application, and these are all encompassed within the scope of protection of the present application. Therefore, the scope of protection of the present application should be determined by the appended claims.

## Claims

1. A method for heating a power battery, comprising:
acquiring a current state parameter value of the power battery; and
heating the power battery using a corresponding heating mode based on the current state parameter value.

2. The method according to claim 1, wherein the heating the power battery using the corresponding heating mode based on the current state parameter value comprises: heating the power battery using a self-heating mode and/or an external heating mode based on the current state parameter value.

3. The method according to claim 2, wherein the current state parameter value comprises a current temperature value and a current state of charge value; and
the heating the power battery using the corresponding heating mode based on the current state parameter value comprises:
heating the power battery using the self-heating mode, in response to the current temperature value of the power battery being smaller than a first preset temperature and a state of charge of the power battery being greater than a preset charge threshold.

4. The method according to claim 2 or 3, wherein the heating the power battery using the self-heating mode comprises:
controlling a charging and discharging circuit where the power battery is located to alternately form a charging loop and a discharging loop, to heat the power battery.

5. The method according to claim 2 or 3, wherein the method further comprises:
acquiring a temperature of a motor coolant in real time in a heating process of using the heating mode of the self-heating;
determining whether a difference between the temperature of the motor coolant and the current temperature value of the power battery from the current state parameter value is larger than a preset temperature difference; and
performing motor coolant-assisted heating, in response to the difference between the temperature of the motor coolant and the current temperature value of the power battery being larger than the preset temperature difference.

6. The method according to claim 5, wherein the performing motor coolant-assisted heating comprises:
controlling the motor coolant to flow through an external pipeline of the power battery, and performing assisted heating on the power battery using the motor coolant.

7. The method according to claim 2 or 3, wherein the method further comprises:
determining whether the current state parameter value of the power battery satisfies a preset self-heating stop condition in the process of heating the power battery using the self-heating mode; and
controlling the charging and discharging circuit where the power battery is located to be disconnected, in response to the current state parameter value of the power battery satisfying the preset self-heating stop condition.

8. The method according to claim 7, wherein the current state parameter value comprises the current temperature value of the power battery; and
the determining whether the current state parameter value of the power battery satisfies the preset self-heating stop condition comprises:
determining that the current state parameter value satisfies the preset self-heating stop condition, in response to the current temperature value being larger than a second preset temperature.

9. The method according to claim 7, wherein the current state parameter value comprises a current temperature rise rate of the power battery; and
the determining whether the current state parameter value of the power battery satisfies the preset self-heating stop condition comprises:
determining that the current state parameter value satisfies the preset self-heating stop condition, in response to the current temperature rise rate being smaller than a preset rate.

10. The method according to claim 7, wherein the method further comprises:
further controlling, in response to determining that the power battery is being heated using a motor coolant when the preset self-heating stop condition is satisfied, to stop heating the power battery using the motor coolant.

11. The method according to any one of claims 1-3, wherein the current state parameter value comprises the current temperature value and the current state of charge value; and
the heating the power battery using the corresponding heating mode based on the current state parameter value comprises:
heating the power battery using the external heating mode, in response to determining that the current temperature value is larger than or equal to a second preset temperature and smaller than a third preset temperature, or determining that the current state of charge value is less than or equal to the preset charge threshold when the power battery is heated using the self-heating mode; or
heating the power battery using the external heating mode when the current state parameter value fails to satisfy a self-heating condition and the current temperature value is smaller than the third preset temperature.

12. The method according to claim 11, wherein the heating the power battery using the external heating mode comprises:
controlling an external heat source to heat the power battery.

13. An apparatus for heating a power battery, comprising:
an acquisition module configured to acquire a current state parameter value of the power battery; and
a heating module configured to heat the power battery using a corresponding heating mode based on the current state parameter value.

14. An electronic device, comprising a memory, a processor, and a computer program stored on the memory and executable on the processor, wherein the processor executes the program to implement the method according to any one of claims 1-12.

15. A system for heating a power battery, comprising a controller, a charging and discharging circuit connected to the controller, and an external heat source, wherein the controller is configured to implement the method according to any one of claims 1-12.

16. The heating system according to claim 15, wherein the charging and discharging circuit comprises a switch module, an energy storage module, and a charge and discharge switching module;
the switch module, the charge and discharge switching module, and the power battery are connected in parallel;
a first terminal of the energy storage module is connected to the switch module, a second terminal of the energy storage module is connected to the charge and discharge switching module;
the switch module and the charge and discharge switching module are configured to form a charging and discharging loop under the control of the controller, to charge and discharge the power battery to heat the power battery; and
the external heat source is configured to heat the power battery under the control of the controller.

17. The system according to claim 15 or 16, wherein the external heat source comprises a PTC heating apparatus.

18. A computer-readable storage medium, storing a computer program thereon, wherein the program is executed by a processor to implement the method according to any one of claims 1-12.

19. A battery power plant, comprising a power battery and the heating system according to any one of claims 15-17, wherein the power battery is configured to provide power, and the heating system is configured to heat the power battery.
